# EUROPÄISCHE PATENTANMELDUNG

(11) **EP 2 774 861 A1**
(43) Veröffentlichungstag der Anmeldung: **10.09.2014**
(21) Anmeldenummer: 14150584.2
(22) Anmeldetag: 09.01.2014
(51) Int. Cl.: B65C 9/00

(54) **Etikettiermaschine und Verfahren zum Ettikettieren von Behältern**

(30) Priorität: 08.03.2013 DE 102013102360
(71) Anmelder: Krones AG, 93073 Neutraubling (DE)
(72) Erfinder: Kellhammer, Thomas, 93073 Neutraubling (DE); Giehrl, Robert, 93073 Neutraubling (DE)
(74) Vertreter: Schuhbießer, Irmgard Gertrud

(57) **Zusammenfassung**

Es sind eine Etikettiermaschine (4) und ein Verfahren zum Etikettieren von Behältern (2) bereitgestellt. Die Etikettiermaschine (4) umfasst mindestens ein Etikettiermodul (20) zum Etikettieren von Behältern (2) mit einem Etikett (3), und eine Anschlusseinrichtung (30; 80) zum Anschluss eines Etikettiermoduls (20) an eine elektrische Stromleitung (40, 50)" mit welcher das Etikettiermodul (20) mit elektrischem Strom (60) zum Betrieb des Etikettiermoduls (20) versorgbar ist, wobei die Anschlusseinrichtung (30; 80; 90) derart ausgestaltet ist, dass eine Datenverbindung zur Übertragung eines Datensignals (61) zwischen dem Etikettiermodul (20) und der Etikettiermaschine (4) über den Anschluss für die elektrische Stromleitung (40, 50) realisiert ist. Alternativ ist es auch möglich, dass die Anschlusseinrichtung (90) zur kontaktlosen Übertragung des Datensignals (61) zwischen dem Etikettiermodul (20) und der Etikettiermaschine (4) ausgestaltet ist.

## Beschreibung

Die vorliegende Erfindung bezieht sich auf eine Etikettiermaschine und ein Verfahren zum Etikettieren von Behältern.

Eine Etikettiermaschine wird beispielsweise bei einer Behälterbehandlungsanlage in der Getränkeindustrie eingesetzt. Hierbei werden Behälter, wie Flaschen, Dosen, usw., aus einem Vorformling hergestellt und/oder derart behandelt, beispielsweise gereinigt, sortiert, gefüllt, etikettiert, usw., dass ein für einen Getränkehändler fertiges Produkt bereitgestellt wird. Demzufolge ist oder umfasst eine Behälterbehandlungsanlage im Fall von Kunststoffbehältern beispielsweise eine Blasmaschine, eine Reinigungsmaschine, eine Füllmaschine, eine Etikettiermaschine, usw. Die Behälterbehandlungsanlage kann die jeweiligen Maschinen mit elektrischem Strom für deren Antrieb, insbesondere mittels eines elektrischen Motors, versorgen. Darüber hinaus kann die Behälterbehandlungsanlage die Maschinen bei Bedarf mit flüssigen und/oder gasförmigen Medien versorgen. Außerdem besteht zwischen der Behälterbehandlungsanlage und ihren einzelnen Maschinen eine Verbindung zur Übertragung von Datensignalen.

EP 2 060 496 A1 zeigt eine Etikettiermaschine für Behälter mit einer Basismaschine, die eine Andockstation für ein Etikettier-Aggregat aufweist. Mit der Andockstation ist ein Anschluss an die elektrische Stromversorgung, eine Verbindung für elektrische Signale oder elektrische Daten-Nachrichten und für mehrere Medien, wie Druckluft, Wasser, und dergleichen möglich.

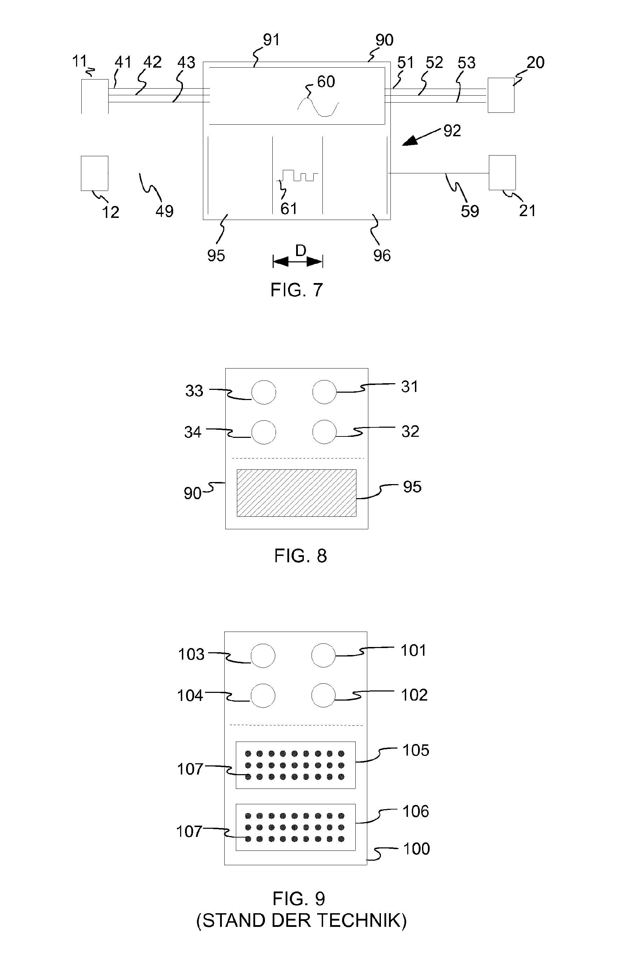

Fig. 9 veranschaulicht eine Anschlusseinrichtung 100 wie sie bei der Anmelderin Verwendung findet. Die Anschlusseinrichtung 100 ist als elektromechanisches Stecksystem ausgeführt, wobei verschiedene Etikettier-Aggregate oder Etikettiermodule von der Basis- oder Hauptmaschine der Etikettiermaschine angesteckt oder von ihr abgesteckt sein können, was auch als andocken oder abdocken an einer Andockstation bezeichnet werden kann. Hier sind Anschlusselemente 101 bis 104 zum Anschluss einer elektrischen Stromleitung für die Versorgung eines der Etikettiermodule mit elektrischem Strom von der Hauptmaschine vorgesehen. Die Datenverbindung zwischen Hauptmaschine und Etikettiermodul wird in Fig. 9 mit zwei Datenanschlüssen 105, 106 mit Steckerstiften 107 für beispielsweise eine Ethernet-Verbindung bewerkstelligt.

Problematisch ist jedoch, dass die Anschlusseinrichtung 100 bei einer Etikettiermaschine in einem sehr begrenzten Raum zwischen zwei Etikettiermodulen angeordnet ist. Somit steht nur sehr wenig Raum für die Anschlusseinrichtung 100 zur Verfügung. Daher besteht Bedarf, die Anschlusseinrichtung 100 kleiner als bisher zu gestalten.

Zudem ist es nachteilig, dass bei der Anschlusseinrichtung 100 das elektromechanische Stecksystem zur Datenübertragung, das beispielsweise mittels Ethernet-Steckeinsätzen ausgeführt ist, systembedingt verschleißbehaftet und wenig resistent gegen Verschmutzung ist.

Problematisch ist ferner, dass die Andockstation Platz für den Anschluss einer Vielzahl von Leitungen bieten muss. Dadurch wird die Andockstation zum einen voluminös und sperrig. Zum anderen wird die Andockstation mit jeder weiteren anzuschließenden Leitung aufwändiger in der Herstellung. Aufgrund von widrigen Umgebungsbedingungen muss für jede anzuschließende Leitung eine Abdichtung gegen Eindringen von Staub und/oder Flüssigkeit gewährleistet werden.

Ein weiteres Problem besteht darin, dass Datenübertragungswege meist einen Übertragungsstandard für Ethernet von mindestens der Kategorie 5 (CAT 5) erfüllen sollen. Weil meist mindestens die Kategorie 5 von Steckdose zu Steckdose gewährleistet sein muss und die Steckdose und ihr Anschluss am teuersten sind, bilden sie einen nicht zu vernachlässigenden Kostenfaktor. Überlegenswert ist auch eine Realisierung des Datenübertragungswegs mit Lichtleitern und entsprechenden Steckverbindungen. Jedoch ist diese Variante in der Regel noch kostenintensiver.

Zudem ist es nachteilig, dass zwischen der Etikettiermaschine und den einzelnen Etikettier-Aggregaten Leitungen zur Datenübertragung zu verlegen sind. Insbesondere sind zwischen einer Behälterbehandlungsanlage, genauer gesagt ihrer Steuereinrichtung, und einer Steuereinrichtung zum Steuern einer der Maschinen, oft weite Wege vorhanden. In Bezug auf Datenleitungen kommt hier eine beträchtliche Anzahl von Leitungen zusammen. Demgegenüber steht jedoch oft nur sehr wenig Raum für die gesamte Behälterbehandlungsanlage und/oder die Etikettiermaschine und folglich auch für alle ihre Komponenten einschließlich der Leitungen zur Verfügung. Somit ist es gegebenenfalls schwierig, die Leitungen entsprechend der für sie geltenden Installationsvorschriften zu verlegen. Noch dazu bedeutet jede Leitung eine gewisse Brandlast, die aus Sicherheitsgründen so niedrig wie möglich sein sollte.

Daher ist es Aufgabe der vorliegenden Erfindung, eine Etikettiermaschine und ein Verfahren zum Etikettieren von Behältern bereitzustellen, mit welchen die zuvor genannten Probleme gelöst werden können. Insbesondere soll mit der Etikettiermaschine und dem Verfahren ermöglicht werden, dass die Kommunikation zwischen der Steuereinrichtung der Etikettiermaschine und den sonstigen Komponenten der Etikettiermaschine auf möglichst einfache Weise zuverlässig, sicher und günstig ermöglicht wird sowie die Installation einer hierfür erforderlichen Verbindung vereinfacht wird.

Diese Aufgabe wird gemäß einem Ausführungsbeispiel durch eine Etikettiermaschine nach Patentanspruch 1 gelöst. Die Etikettiermaschine umfasst mindestens ein Etikettiermodul zum Etikettieren von Behältern mit einem Etikett, und eine Anschlusseinrichtung zum Anschluss eines Etikettiermoduls an eine elektrische Stromleitung, mit welcher das Etikettiermodul mit elektrischem Strom zum Betrieb des Etikettiermoduls versorgbar ist, wobei die Anschlusseinrichtung derart ausgestaltet ist, dass eine Datenverbindung zur Übertragung eines Datensignals zwischen dem Etikettiermodul und der Etikettiermaschine über den Anschluss für die elektrische Stromleitung realisiert ist.

Mit der Realisierung der Datenverbindung auf die zuvor beschriebene Weise hat die Anschlusseinrichtung und somit ihr Gehäuse einen kleineren Platzbedarf als eine herkömmliche Anschlusseinrichtung. Zudem muss nur die Stromleitung gegen Eindringen von Staub und/oder Flüssigkeit abgedichtet werden.

Bei einer solchen Anschlusseinrichtung ist das System zur Übertragung von elektrischem Strom und Daten weniger verschleißbehaftet als bei einer herkömmlichen Anschlusseinrichtung. Außerdem ist bei der Anschlusseinrichtung das System zur Übertragung von elektrischem Strom und Daten resistenter gegen Verschmutzung als bei einer herkömmlichen Anschlusseinrichtung.

Ein weiterer Vorteil der Anschlusseinrichtung ergibt sich daraus, dass die Installation der für die Realisierung erforderlichen Komponenten weniger aufwändig ist. Hierbei ist es, je nach Bedarf, nicht mehr notwendig, einen separaten Platz für den Anschluss einer Datenleitung in der Anschlusseinrichtung vorzusehen. Dadurch wird die Anschlusseinrichtung kostengünstiger in der Herstellung. Außerdem wird die Installation und Wartung der Etikettiermaschine weniger aufwändig und dadurch kostengünstiger. Sollte es jedoch ausreichend sein, nur die Datenleitung und die erforderliche Steckdose einzusparen und dadurch die Realisierung der Datenverbindung zu verbessern, kann das Powerline-Modem jedoch auch in die Anschlusseinrichtung integriert oder an der Anschlusseinrichtung angeordnet werden.

Auf diese Weise können die zuvor genannten Probleme des Standes der Technik einfach gelöst werden.

Vorteilhafte weitere Ausgestaltungen der Etikettiermaschine sind in den abhängigen Patentansprüchen angegeben.

Es ist möglich, dass das Etikettiermodul von einer Etikettiermodul-Steuereinrichtung zur Steuerung des Etikettiermoduls steuerbar ist, und dass die Datenverbindung zwischen einer Etikettiermodul-Steuereinrichtung und einer Hauptsteuereinrichtung der Etikettiermaschine vorgesehen ist.

Gemäß einem Ausführungsbeispiel kann das Etikettiermodul oder die Anschlusseinrichtung ein erstes Powerline-Modem zum Modulieren des Datensignals auf den elektrischen Strom der Stromversorgung oder zum Demodulieren des Datensignals von dem elektrischen Strom der Stromversorgung aufweisen, und der Hauptsteuereinrichtung kann ein zweites Powerline-Modem zugeordnet sein zum Modulieren eines Datensignals auf den elektrischen Strom der Stromversorgung oder zum Demodulieren eines Datensignals von dem elektrischen Strom der Stromversorgung.

Darüber hinaus können das erste und das zweite Powerline-Modem mit einem ersten Leiter und dem Neutralleiter der elektrischen Stromversorgung verbunden sein, so dass das Datensignal mit dem ersten Leiter und dem Neutralleiter der elektrischen Stromversorgung übertragbar ist.

Bevorzugt weist das erste und zweite Powerline-Modem jeweils eine drahtgebundene oder drahtlose Schnittstelle für die Datenverbindung auf, und/oder das erste Powerline-Modem stellt einen Anschluss für eine Datenleitung zu der Etikettiermodul-Steuereinrichtung bereit und das zweite Powerline-Modem stellt einen Anschluss für eine Datenleitung zu der Hauptsteuereinrichtung bereit.

Diese Aufgabe wird gemäß einem weiteren Ausführungsbeispiel durch eine Etikettiermaschine nach Patentanspruch 6 gelöst. Die Etikettiermaschine umfasst mindestens ein Etikettiermodul zum Etikettieren von Behältern mit einem Etikett, und eine Anschlusseinrichtung zum Anschluss eines Etikettiermoduls an eine elektrische Stromleitung, mit welcher das Etikettiermodul mit elektrischem Strom zum Betrieb des Etikettiermoduls versorgbar ist, wobei die Anschlusseinrichtung zudem zur kontaktlosen Übertragung eines Datensignals zwischen dem Etikettiermodul und der Etikettiermaschine ausgestaltet ist.

Zumindest in Bezug auf den geringeren Platzbedarf, den geringeren Verschleiß und die Resistenz gegen Verschmutzung hat die Anschlusseinrichtung und damit die Etikettiermaschine gemäß dem weiteren Ausführungsbeispiel die gleichen Vorteile wie die davor beschriebene Anschlusseinrichtung und damit die Etikettiermaschine.

Bevorzugt ist die Anschlusseinrichtung gemäß dem weiteren Ausführungsbeispiel zur kapazitiven Übertragung des Datensignals ausgestaltet.

Auch bei dem weiteren Ausführungsbeispiel ist es möglich, dass das Etikettiermodul von einer Etikettiermodul-Steuereinrichtung zur Steuerung des Etikettiermoduls steuerbar ist, und dass die Datenverbindung zwischen einer Etikettiermodul-Steuereinrichtung und einer Hauptsteuereinrichtung der Etikettiermaschine vorgesehen ist.

Bei den zuvor beschriebenen Etikettiermaschinen kann das Datensignal gemäß dem Übertragungsprotokoll eines lokalen Netzwerks aufgebaut sein.

Bei den zuvor beschriebenen Etikettiermaschinen besteht auch die Möglichkeit, dass das Datensignal gemäß einer der Spezifikationen für Ethernet oder Token-Ring oder WLAN oder Bluetooth aufgebaut ist.

Die zuvor genannten Anschlusseinrichtungen können auch eine Anschlusseinheit zum Anschluss eines flüssigen und/oder gasförmigen Mediums an das Etikettiermodul aufweisen.

Es ist möglich, dass die oben genannte Etikettiermaschine Bestandteil einer Behälterbehandlungsanlage ist.

Die Aufgabe wird zudem durch ein Verfahren zum Etikettieren von Behältern mittels Behälterbehandlungsanlage nach Patentanspruch 13 gelöst. Das Verfahren hat die Schritte: Anbringen eines Etiketts an einen Behälter mit einem Etikettiermodul einer Etikettiermaschine, welches Etikettiermodul eine Anschlusseinrichtung aufweist zum Anschluss des Etikettiermoduls an eine elektrische Stromleitung, mit welcher das Etikettiermodul mit elektrischem Strom zum Betrieb des Etikettiermoduls versorgt wird, und Steuern des Anbringens über eine Datenverbindung zur Übertragung eines Datensignals zwischen dem Etikettiermodul und der Behälterbehandlungsanlage, wobei die Datenverbindung über den Anschluss für die elektrische Stromleitung der Anschlusseinrichtung realisiert wird oder wobei das Datensignal zwischen dem Etikettiermodul und der Etikettiermaschine in der Anschlusseinrichtung kontaktlos übertragen wird.

Das Verfahren erzielt dieselben Vorteile, wie sie zuvor in Bezug auf die Etikettiermaschine erwähnt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Nachfolgend ist die Erfindung unter Bezugnahme auf die beiliegende Zeichnung und anhand eines Ausführungsbeispiels näher beschrieben. Es zeigen:
Fig. 1 eine stark vereinfachte Draufsicht auf eine Behälterbehandlungsanlage gemäß einem ersten Ausführungsbeispiel;
Fig. 2 eine Draufsicht auf eine Anschlusseinrichtung eines Etikettiermoduls gemäß dem ersten Ausführungsbeispiel;
Fig. 3 ein schematisches Blockschaltbild der Behälterbehandlungsanlage gemäß dem ersten Ausführungsbeispiel;
Fig.4 eine vereinfachte Draufsicht auf ein Powerline-Modem gemäß dem ersten Ausführungsbeispiel;
Fig.5 eine vereinfachte Draufsicht auf ein Powerline-Modem gemäß einem zweiten Ausführungsbeispiel;
Fig. 6 eine Draufsicht auf eine Anschlusseinrichtung gemäß einem dritten Ausführungsbeispiel;
Fig. 7 ein schematisches Blockschaltbild einer Behälterbehandlungsanlage gemäß einem dritten Ausführungsbeispiel;
Fig. 8 eine Draufsicht auf eine Anschlusseinrichtung eines Etikettiermoduls gemäß dem dritten Ausführungsbeispiel; und
Fig. 9 eine Draufsicht auf eine Anschlusseinrichtung eines Etikettiermoduls gemäß dem Stand der Technik.

In den Figuren sind gleiche oder funktionsgleiche Elemente, sofern nichts anderes angegeben ist, mit denselben Bezugszeichen versehen.

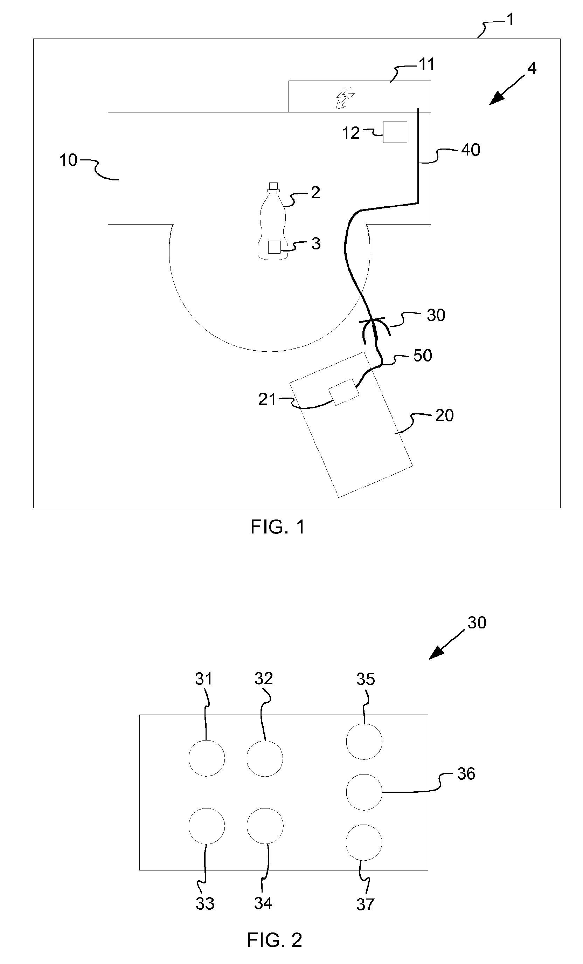

Fig. 1 zeigt eine Behälterbehandlungsanlage 1 zum Behandeln eines Behälters 2. Insbesondere dient die Behälterbehandlungsanlage 1 zum Etikettieren des Behälters 2 mit einem Etikett 3. Der Behälter 2 ist in Fig. 1 als Flasche dargestellt. Der Behälter 2 kann jedoch auch beispielsweise eine Dose, usw. sein.

In Fig. 1 umfasst die Behälterbehandlungsanlage 1 eine Etikettiermaschine 4. Die Etikettiermaschine 4 hat eine Hauptmaschine 10, einen elektrischen Schaltschrank 11, eine Hauptsteuereinrichtung 12, ein Etikettier-Aggregat oder Etikettiermodul 20, eine Etikettiermodul-Steuereinrichtung 21, eine Anschlusseinrichtung 30, eine Verbindungsleitung 40, welche den elektrischen Schaltschrank 11 mit der Anschlusseinrichtung 30 verbindet, und eine Anschlussleitung 50, welche mit der Anschlusseinrichtung 30 und dem Etikettiermodul 20 verbunden ist.

Bei der Etikettiermaschine 4 ist in diesem Ausführungsbeispiel nur ein Etikettiermodul 20 zum Etikettieren von Behältern 2 mit einem Etikett 3 vorgesehen. Es können jedoch auch mehr als ein Etikettiermodul 20 vorgesehen sein. Zum Etikettieren werden die noch zu etikettierenden Behälter 2 mit der Hauptmaschine 10, beispielsweise mit einem Behälterkarussell, an dem Etikettiermodul 20 vorbeibewegt, so dass das Etikettiermodul 20 an den Behältern 2 nacheinander ein Etikett 3 anbringen kann.

Die Etikettiermaschine 4 wird von der Hauptsteuereinrichtung 12 gesteuert. Das Etikettiermodul 20 wird von der Etikettiermodul-Steuereinrichtung 21 gesteuert. Die Hauptsteuereinrichtung 12 ist der Etikettiermodul-Steuereinrichtung 21 übergeordnet. Alle Komponenten der Etikettiermaschine 4 werden von dem Schaltschrank 11 mit elektrischem Strom aus einem elektrischen Energieversorgungsnetz versorgt, wie in Fig. 1 durch einen gezackten Pfeil auf dem Schaltschrank 11 angedeutet. Falls die Etikettiermaschine 4 mehr als ein Etikettiermodul 20 und somit mehr als eine Etikettiermodul-Steuereinrichtung 21 aufweist, steuert die Hauptsteuereinrichtung 12 die Etikettiermodul-Steuereinrichtungen 21 der jeweiligen Etikettiermodule 20.

Die Verbindungsleitung 40 ist in Fig. 1 an, insbesondere innerhalb, der Hauptmaschine 10 verlegt. An dem einen Ende der Verbindungsleitung 40 ist die Anschlusseinrichtung 30 angeordnet. In die Anschlusseinrichtung 30 ist eine Anschlussleitung 50 gesteckt, um das Etikettiermodul 20 an die Anschlusseinrichtung 30 und damit die Verbindungsleitung 40 und den Schaltschrank 11 anzuschließen. Die Anschlussleitung 50 hat hierfür an ihrem Ende beispielsweise Steckelemente, welche in die als Buchse ausgeführte Anschlusseinrichtung 30 zum Herstellen einer elektrischen Verbindung gesteckt werden können. Alternativ kann auch die Anschlussleitung 50 an ihrem Ende als Buchse ausgeführt sein, welche Stecker der Anschlusseinrichtung 30 zum Herstellen einer elektrischen Verbindung aufnehmen kann. Die Anschlusseinrichtung 30 und die Anschlussleitung 50 sind somit als elektromechanisches Stecksystem ausgebildet.

Fig. 2 zeigt die Anschlussseite der Anschlusseinrichtung 30 genauer. Demzufolge können an die Anschlusseinrichtung 30 die drei Phasenleiter und der Neutralleiter eines Drehstromanschlusses über Anschlusselemente 31, 32, 33, 34 angeschlossen werden. Außerdem umfasst die Anschlusseinrichtung 30 an ihrer Anschlussseite Medienanschlüsse 35, 36, 37 zum Anschluss von nicht dargestellten Medien, die beim Betrieb des Etikettiermoduls 20 Verwendung finden. Die Medien können beispielsweise flüssig und/oder gasförmig sein. Insbesondere sind Druckluft, Wasser, usw. mögliche Medien.

Bei der Anschlusseinrichtung 30 dienen die Anschlusselemente 31 bis 34 nicht nur für die elektrische Energieversorgung des Etikettiermoduls 20. Die Anschlusselemente 31 bis 34 dienen außerdem zu einer Realisierung einer Übertragung von Datensignalen zum Etikettiermodul 20, wie später noch ausführlicher beschrieben. Dagegen dienen die Medienanschlüsse 35 bis 37 als Anschlusseinheit für nicht-elektrische Medien, also nicht für elektrischen Strom oder elektrische Signale.

Somit hat die Anschlusseinrichtung 30 gemäß diesem Ausführungsbeispiel keinen separaten Anschluss oder von der elektrischen Stromversorgung getrennten Anschluss für die Realisierung einer Übertragung von Datensignalen von der Hauptsteuereinrichtung 12 und/oder dem elektrischen Schaltschrank 11 zum Etikettiermodul 20. Die Anschlusseinrichtung 30 weist nur Anschlüsse für eine elektrische Leistungsversorgung und eine Versorgung mit anderen nicht-elektrischen Medien auf.

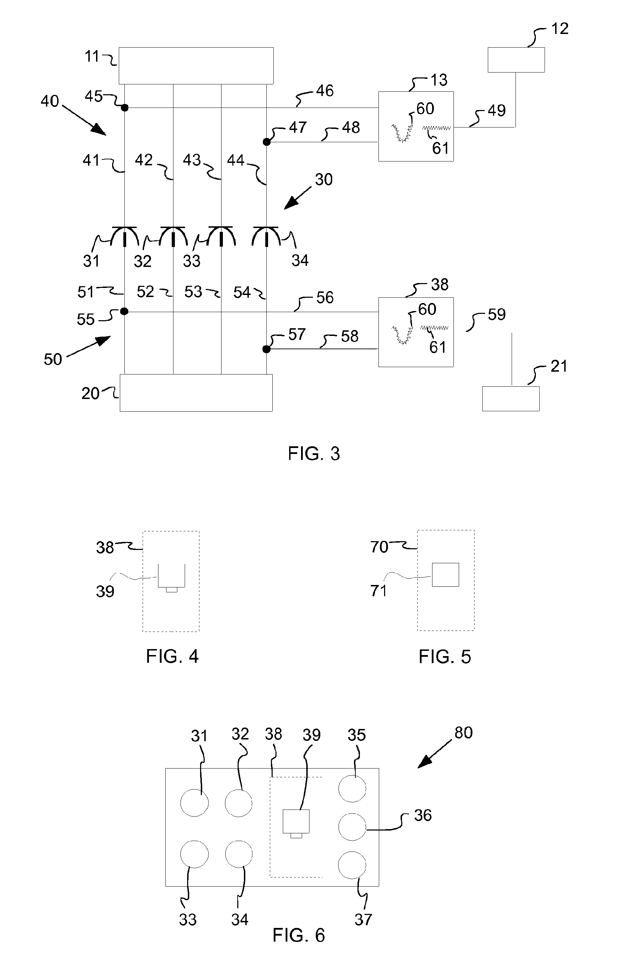

Fig. 3 zeigt die Verschaltung der Verbindungsleitung 40 an ihrem einen Ende mit dem Schaltschrank 11 und der Hauptsteuereinrichtung 12 und an ihrem anderen Ende mit der Anschlusseinrichtung 30, dem Etikettiermodul 20 und der Etikettiermodul-Steuereinrichtung 21 auf der anderen Seite genauer.

Die Verbindungsleitung 40 ist eine Leitung für Dreiphasenleiter plus Neutralleiter. Demzufolge hat die Verbindungsleitung 40 einen ersten Leiter 41, einen zweiten Leiter 42, einen dritten Leiter 43 und einen vierten Leiter 44, welcher der Neutralleiter ist. Der erste bis dritte Leiter 41, 42, 43 führt jeweils einen gegenüber den anderen Leitern 41, 42, 43 phasenversetzten Wechselstrom. Der erste Leiter 41 ist mit der Buchse des ersten Anschlusselements 31 verbunden. Der zweite Leiter 42 ist mit der Buchse des zweiten Anschlusselements 32 verbunden. Der dritte Leiter 43 ist mit der Buchse des dritten Anschlusselements 33 verbunden. Der vierte Leiter 44 ist mit der Buchse des vierten Anschlusselements 34 verbunden.

Demzufolge ist auch die Anschlussleitung 50 eine Leitung für Dreiphasenleiter plus Neutralleiter. Hierbei ist ein erster Anschlussleiter 51 in die Buchse des ersten Anschlusselements 31 gesteckt und somit mit dem ersten Leiter 41 verbunden. Ein zweiter Anschlussleiter 52 ist in die Buchse des zweiten Anschlusselements 32 gesteckt und somit mit dem zweiten Leiter 42 verbunden. Ein dritter Anschlussleiter 53 ist in die Buchse des dritten Anschlusselements 33 gesteckt und somit mit dem dritten Leiter 43 verbunden. Ein vierter Anschlussleiter 54 ist in die Buchse des vierten Anschlusselements 34 gesteckt und somit mit dem vierten Leiter 54, dem Neutralleiter, verbunden. An ihrem anderen Ende sind die Anschlussleiter 51, 52, 53, 54 mit dem Etikettiermodul 20 verbunden. Auf diese Weise kann ein nicht dargestellter Antriebsmotor des Etikettiermoduls 20 vom Schaltschrank 11 aus mit elektrischem Strom versorgt werden, so dass ein Betrieb des Etikettiermoduls 20 möglich ist. Zusätzlich dazu kann der Antriebsmotor des Etikettiermoduls 20 von der Etikettiermodul-Steuereinrichtung 21 mit einer Vorgabe der Hauptsteuereinrichtung 12 in Form eines Daten- oder Steuersignals gesteuert werden.

Von dem ersten Leiter 41 zweigt an einem ersten Knoten 45 eine erste Stichleitung 46 ab und führt zu einem ersten Powerline-Modem 13. Zudem zweigt von dem vierten Leiter 44, dem Neutralleiter, an einem zweiten Knoten 47 eine zweite Stichleitung 48 ab, die ebenfalls zu dem Powerline-Modem 13 führt. In dem Powerline-Modem 13 wird der mittels der Stichleitungen 46, 48 übertragene elektrische Strom 60 demoduliert, so dass mittels des Powerline-Modems 13 ein auf den elektrischen Strom 60 moduliertes Datensignal 61 herausgefiltert wird. Das Datensignal 61 kann der Hauptsteuereinrichtung 12 von dem Powerline-Modem 13 über eine erste Steuersignalverbindung 49 zugeführt werden. Umgekehrt kann die Hauptsteuereinrichtung 12 über die erste Steuersignalverbindung 49 ein Datensignal 61 an das Powerline-Modem 13 senden. In diesem Fall moduliert das Powerline-Modem 13 das Datensignal 61 auf den Strom 60 in dem ersten Leiter 41 und dem vierten Leiter 44, den Neutralleiter, auf, so dass sich der modulierte elektrische Strom 60 ergibt.

Um das Datensignal 61 bis zur Etikettiermodul-Steuereinrichtung 21 zu übertragen, zweigt von dem ersten Anschlussleiter 51 an einem dritten Knoten 55 eine dritte Stichleitung 56 und von dem vierten Anschlussleiter 54, dem Neutralleiter, an einem vierten Knoten 57 eine vierte Stichleitung 58 ab. Die Stichleitungen 56, 58 führen zu einem zweiten Powerline-Modem 38. Das Powerline-Modem 38 arbeitet ähnlich zum ersten Powerline-Modem 13. Demzufolge moduliert das Powerline-Modem 38 das Datensignal 61 auf den elektrischen Strom 60 in den Anschlussleitern 51, 54 auf oder demoduliert das Datensignal 61 von dem elektrischen Strom 60. Als Folge davon kann das Datensignal 61 mittels einer zweiten Steuersignalverbindung 59 von dem Powerline-Modem 38 zu der Etikettiermodul-Steuereinrichtung 21 übertragen werden. Ebenso kann die Etikettiermodul-Steuereinrichtung 21 mittels der Steuersignalverbindung 59 ein Datensignal 61 an das Powerline-Modem 38 übertragen, so dass es auf den elektrischen Strom 60 als Signal aufmoduliert wird und dann in Richtung der Hauptsteuereinrichtung 12 gesendet werden kann, wie zuvor beschrieben.

Somit bilden die Verbindungsleitung 40 und die Anschlussleitung 50, genauer gesagt ihre Leiter 41, 44, 51, 54, eine elektrische Stromleitung, die auch für die Leitung eines elektrischen Stroms zwischen dem Schaltschrank 11 und dem Etikettiermodul 20 zur Leistungsversorgung des Etikettiermoduls 20 Verwendung findet. Zudem sind die Stichleitungen 46, 48, 56, 58 entsprechend auszulegen, dass sie für die Leitung des elektrischen Stroms 60 einschließlich des Datensignals 61 geeignet sind. Die Stichleitungen 46, 48, 56, 58 sind Teil der elektrischen Stromleitung, welche die Datenverbindung zwischen der Etikettiermaschine 4 bzw. der Behälterbehandlungsanlage 1 und dem Etikettiermodul 20 bereitstellt.

Der Schaltschrank 11 wird von einem Drehstromsystem gespeist, das eine elektrische Spannung in einem Bereich von beispielsweise ca. 220/380 V bis ca. 230/400 V und eine Frequenz in einem Bereich von beispielsweise ca. 50 Hz bis ca. 60 Hz hat. Es sind jedoch auch andere Spannungen und/oder Frequenzen denkbar. In der Verbindungsleitung 40 und der Anschlussleitung 50 fließt ein entsprechender elektrischer Strom.

Die Frequenz des Datensignals 61 kann insbesondere in einem Bereich von 20 bis 200 kHz liegen. Das erste und zweite Powerline-Modem 13, 38 sind derart ausgestaltet, dass sie die Frequenz des Datensignals 61 auf eine Frequenz festlegen, welche den Betrieb anderer elektrischer Geräte der Behälterbehandlungsanlage 1 und somit der Etikettiermaschine 4 nicht stört. Im Schaltschrank 11 und/oder im Etikettiermodul 20 kann ein nicht dargestelltes Filter, insbesondere in Form eines Bandpassfilters oder Tiefpassfilters, vorgesehen sein. Mit dem Filter kann das Datensignal 61 von dem elektrischen Strom 60 herausgefiltert werden. Somit kann das Datensignal 61 den Betrieb des Schaltschranks 11 und/oder des Etikettiermoduls 20 nicht stören.

Wie in Fig. 3 dargestellt, zweigen zwischen dem Schaltschrank 11 und der Anschlusseinrichtung 30 nur die erste und zweite Stichleitung 45, 46 von der Verbindungsleitung 40 ab. Insbesondere sind andere elektrische Geräte nur so in das in Fig. 3 gezeigte System integriert, dass sie die Kommunikation zwischen dem ersten und zweiten Powerline-Modem 13, 38 nicht stören können. Somit sind andere elektrische Geräte vorzugsweise nicht zwischen dem ersten und zweiten Powerline-Modem 13, 38 angeschlossen.

In diesem Ausführungsbeispiel ist das Powerline-Modem 38 nicht in der Anschlusseinrichtung 30 enthalten. Dadurch muss keine Datenleitung in die Anschlusseinrichtung 30 eingeführt werden und gegen Staub und/oder Flüssigkeit abgedichtet werden. Stattdessen ist das Powerline-Modem 38 beispielsweise direkt an der Etikettiermodul-Steuereinrichtung 21 angeordnet. In diesem Fall ist die Steuersignalverbindung 59 im Vergleich zu den Stichleitungen 55, 56 sehr kurz ausgebildet. Dies ist sehr vorteilhaft, wenn die Steuersignalverbindungen 49, 59 teurer als die Stichleitungen 46, 48, 56, 58 sind. In ähnlicher Weise ist das Powerline-Modem 13 vorteilhaft direkt an der Etikettiermodul-Steuereinrichtung 21 angeordnet.

Fig. 4 zeigt sehr schematisch eine mögliche Ausgestaltung des Powerline-Modems 38 gemäß diesem Ausführungsbeispiel. Hierbei hat das Powerline-Modem 38 eine drahtgebundene Anschlusseinheit 39 für ein drahtgebundenes Datennetzwerk, insbesondere ein lokales Netzwerk, wie beispielsweise Ethernet, Token-Ring, usw. Die Anschlusseinheit 39 ist in Fig. 4 als ein Beispiel in Form einer RJ-45-Buchse ausgeführt, mittels welcher ein Anschluss an ein Datennetzwerk bewerkstelligt werden kann. Die Steuersignalverbindungen 49, 59 haben demzufolge an ihrem einen Ende einen in die RJ-45-Buchse passenden RJ-45-Stecker. Das Powerline-Modem 13 kann in gleicher Weise mit einer Anschlusseinheit 39 ausgeführt sein, auch wenn dies in den Zeichnungen nicht dargestellt ist. In jedem Fall haben das erste und zweite Powerline-Modem 13, 38 mit der Anschlusseinheit 39 jeweils eine drahtgebundene Schnittstelle für ein Datenbussystem oder ein Datennetzwerk, wie ein lokales Netzwerk (LAN = Local Area Network), ein Weitverkehrsnetzwerk (WAN = Wide Area Network), usw. Das gemäß einem solchen Standard oder Spezifikation aufgebaute Datensignal 61 wird demzufolge drahtgebunden entlang des Datenübertragungswegs der ersten und zweiten Steuersignalverbindungen 49, 59 übertragen.

Fig. 5 zeigt sehr schematisch eine mögliche Ausgestaltung eines Powerline-Modems 70 gemäß einem zweiten Ausführungsbeispiel. Das Powerline-Modem 70 kann anstelle des ersten oder zweiten Powerline-Modems 13, 38 zum Einsatz kommen. Ansonsten ist die Behälterbehandlungsanlage 1 bei diesem Ausführungsbeispiel aufgebaut wie in Fig. 1 bis Fig. 3 gezeigt, so dass sie hier nicht erneut gezeigt und beschrieben ist.

In Fig. 5 ist das Powerline-Modem 70 mit einer Funkeinheit 71 für eine drahtlose Kommunikation mit der jeweiligen Steuereinrichtung 13, 38 versehen. Hierbei kommuniziert die Hauptsteuereinrichtung 12 mit einem Powerline-Modem 70 und die Etikettiermodul-Steuereinrichtung 21 mit einem anderen Powerline-Modem 70. Die Funkeinheit 71 ermöglicht also eine drahtlose Verbindung mittels beispielsweise der Standards oder Spezifikationen für WLAN (Wireless Local Area Network = drahtloses lokales Netzwerk), Bluetooth oder mittels Infrarot oder einem sonstigen drahtlosen Datenübertragungsstandard. Das gemäß einem solchen Standard oder einer solchen Spezifikation aufgebaute Datensignal 61 wird demzufolge per Funk und drahtlos entlang des Datenübertragungswegs der ersten und zweiten Steuersignalverbindungen 49, 59 übertragen. Auch dadurch haben die Powerline-Modems 70, die als erstes und zweites Powerline-Modem zum Einsatz kommen, mit der Funkeinheit 71 jeweils eine Schnittstelle für ein Datenbussystem oder ein Datennetzwerk, nämlich ein drahtloses lokales Netzwerk.

Fig. 6 zeigt eine Anschlusseinrichtung 80, die gemäß einem dritten Ausführungsbeispiel bei der Behälterbehandlungsanlage 1 zum Einsatz kommen kann. Die Behälterbehandlungsanlage 1 ist aufgebaut wie in Fig. 1 gezeigt, so dass sie hier nicht erneut gezeigt und beschrieben ist.

Bei diesem Ausführungsbeispiel umfasst die Anschlusseinrichtung 80 das Powerline-Modem 38. Die Anschlusseinrichtung 80 umfasst zudem wieder die Medienanschlüsse 31 bis 37 wie bei der Anschlusseinrichtung 30 des ersten Ausführungsbeispiels. Hierdurch ist zwar die Anschlusseinrichtung 80 größer als die Anschlusseinrichtung 30 des ersten oder zweiten Ausführungsbeispiels. Jedoch ist die Anschlusstechnik durch das Powerline-Modem 38 für die Datentechnik deutlich einfacher als bei einer konventionellen Anschlusseinrichtung. Zudem wird die Datenleitung entlang der Hauptmaschine 10 (Fig. 1) eingespart. Dadurch und durch den Entfall der bisher dafür notwendigen Installation sind die Kosten gegenüber dem Stand der Technik dennoch geringer.

Bei der Anschlusseinrichtung 80 dienen die Anschlüsse 31 bis 34, wie bei der Anschlusseinrichtung 30 des ersten Ausführungsbeispiels, für die elektrische Energieversorgung des Etikettiermoduls 20. Außerdem dienen die Medienanschlüsse 35 bis 37 wieder als Anschlusseinheit für physikalische oder nicht-elektrische Medien. Das Powerline-Modem 38 und das Anschlusselement 39 dienen demgegenüber zur Realisierung einer Übertragung von Datensignalen 61 zum Etikettiermodul 20.

Alternativ zum Powerline-Modem 38 kann auch das Powerline-Modem 70 gemäß dem zweiten Ausführungsbeispiel Teil der Anschlusseinrichtung 80 sein. Das Powerline-Modem 13 ist jeweils analog zum Powerline-Modem auf der Seite des Ettikettiermoduls 20 bzw. seiner Steuereinrichtung 21 ausgestaltet. Dadurch kann die Übertragung des Datensignals 61 zwischen den Powerline-Modems und den Steuereinrichtungen 12, 21 gemäß nur einem Datenübertragungsstandard gewährleistet werden. Die Umwandlung des Datensignals 61 in einen anderen Standard ist dann nicht erforderlich.

Gemäß einer weiteren Alternative kann das Powerline-Modem 38 oder 70 auch anders bei der Anschlusseinrichtung 80 angeordnet sein als in Fig. 6 gezeigt. Vorteilhaft ist jedoch, wenn das Powerline-Modem 38 oder 70 derart angeordnet ist, dass die Stichleitungen 55, 56 möglichst kurz sind.

Fig. 7 veranschaulicht in einem schematischen Blockschaltbild ein drittes Ausführungsbeispiel für eine Verbindung des elektrischen Schaltschranks 11 und der Hauptsteuereinrichtung 12 mit dem Etikettiermodul 20 und der Etikettiermodul-Steuereinrichtung 21 der Behälterbehandlungsanlage 1. In diesem Fall ist eine Verbindung 91 als elektromechanisches Stecksystem ausgeführt und dient zur Übertragung des elektrischen Stroms 60. Demgegenüber ist eine Verbindung 92 in der Anschlusseinrichtung 90 kontaktlos oder drahtlos ausgeführt und dient als Datenverbindung. Für die Ausführung der Kopplung hat die Verbindung 92 hat hierfür einen ersten Übertrager 95 und einen zweiten Übertrager 96. Zwischen dem ersten und zweiten Übertrager 95, 96 ist ein Abstand D vorgesehen, dessen Größe so bemessen ist, dass eine sichere Übertragung des Datensignals 61 über die kontaktlose Verbindung gewährleistet ist. Somit erfolgen die Datenübertragung und die Leistungsübertragung bei diesem Ausführungsbeispiel getrennt.

Die Verbindung 91 ist jeweils an einem Ende des ersten bis dritten Leiters 41 bis 43 und an einem Ende des ersten bis dritten Anschlussleiters 51 bis 53 angeordnet. Die Verbindung 92 ist jeweils an einem Ende der ersten und zweiten Steuersignalverbindungen 49, 59 angeordnet. Dadurch ist die Anschlusseinrichtung 90 auf der einen Seite mit dem elektrischen Schaltschrank 11 und der Hauptsteuereinrichtung 12 verbunden. Auf der anderen Seite ist die Anschlusseinrichtung 90 mit dem Etikettiermodul 20 und der Etikettiermodul-Steuereinrichtung 21 verbunden.

In Fig. 7 bilden der erste bis dritte Leiter 41 bis 43 die Verbindungsleitung 40. Der erste bis dritte Leiter 41, 42, 43 führt jeweils einen gegenüber den anderen Leitern 41, 42, 43 phasenversetzten Wechselstrom. Der Neutralleiter ist der Einfachheit halber hier nicht gezeigt. Zudem bilden der erste bis dritte Anschlussleiter 51 bis 53 die Anschlussleitung 50. Der erste bis dritte Anschlussleiter 51 bis 53 führt jeweils wieder den gegenüber den anderen Anschlussleitern 51 bis 53 phasenversetzten Wechselstrom. Der Neutralleiter ist der Einfachheit halber auch hier nicht gezeigt.

Bei diesem Ausführungsbeispiel überträgt die Verbindung 92 und somit die Anschlusseinrichtung 90 das Datensignal 61 kapazitiv vom ersten Übertrager 95 zum zweiten Übertrager 96 oder umgekehrt. Die Datenübertragung wird hierbei kapazitiv im Nahfeld durchgeführt, wodurch externe Störfelder keinen Einfluss haben können. Dadurch ist die Fehlerrate sehr gering.

Da sich der erste und zweite Übertrager 95, 96 nicht berühren, ist die Übertragung kontaktlos. Die kapazitive Übertragung des Datensignals 61 erfolgt mit Hilfe von elektrisch leitfähigen Flächen des ersten und zweiten Übertragers 95, 96.

Mit der Anschlusseinrichtung 90 sind Übertragungsraten bis zu 10 GigaBit/s möglich. Bei Parallelschaltung sind Übertragungsraten bis >40 GigaBit/s möglich. Damit können die Standards oder Spezifikationen für die Übertragungsrate von beispielsweise 10 Megabit/s für Ethernet, 100 Megabit/s für Fast Ethernet, 1000 Megabit/s für Gigabit-Ethernet usw. erfüllt werden.

Fig. 8 stellt die Anschlusseinrichtung 90 in einer Draufsicht auf den Übertrager 95 an der Seite dar, welche zur Übertragung des elektrischen Stroms 60 und des Datensignals 61 an die Seite der Anschlusseinrichtung 90 mit dem zweiten Übertrager 96 dient. Die Seite der Anschlusseinrichtung 90 mit dem zweiten Übertrager 96 ist hier nicht dargestellt jedoch auf die gleiche Weise ausgeführt, wie in Fig. 8 gezeigt.

In Fig. 8 umfasst die Anschlusseinrichtung 90 neben den Steckerstiften oder Buchsen 31 bis 34 nur die Fläche des ersten Übertragers 95, die für die Übertragung des Datensignals 61 an den zweiten Übertrager 96 benötigt wird. Die Verbindung 92 der Anschlusseinrichtung 90 hat demzufolge keine Steckerstifte und daher auch keine Buchsen zur Aufnahme von Steckerstiften. Die Fläche des ersten Übertragers 95, welche der Fläche des zweiten Übertragers 96 zugewandt ist, kann eine im Wesentlichen glatte Fläche sein. Die Fläche des zweiten Übertragers 96, welche der Fläche des ersten Übertragers 95 zugewandt ist, ist vorzugsweise komplementär zu der Fläche des ersten Übertragers 95 ausgebildet. Bei Bedarf kann die in Fig. 8 gezeigte Fläche für den Übertrager 95 auch kleiner ausgebildet sein als gezeigt, so dass die gesamte Anschlusseinrichtung 90 und somit auch ihr Gehäuse so klein wie möglich wird.

Auch wenn die kontaktlose Datenübertragung bei dem dritten Ausführungsbeispiel vorzugsweise kapazitiv erfolgt, kann die kontaktlose Datenübertragung alternativ dazu aber auch optisch, mit Hochfrequenz, induktiv und vorteilhafterweise ohne Protokoll ausgeführt sein.

Zudem kann mit der Anschlusseinrichtung 90 ein Echtzeit-Ethernetbus realisiert werden, so dass alle im Gesamtsystem anfallenden Messwerte zeitsynchron und mit großer Datensicherheit erfasst und verarbeitet werden können.

Gemäß einer Modifikation des dritten Ausführungsbeispiels kann auch der elektrische Strom 60 in der Anschlusseinrichtung 90 kontaktlos übertragen werden. In diesem Fall wird der elektrische Strom 60 induktiv übertragen, beispielsweise mit Hilfe von Spulen, und das Datensignal 61 kapazitiv.

Gemäß einer weiteren Modifikation des dritten Ausführungsbeispiels können der elektrische Strom 60 und das Datensignal 61 zumindest abschnittsweise über zwei verschiedene Kanäle der Verbindungsleitung 40 und/oder der Anschlussleitung 50 übertragen werden. Daraufhin können der elektrische Strom 60 und das Datensignal 61 getrennt zwischen dem ersten und zweiten Übertrager 95, 96 übertragen werden, wie zuvor in Bezug auf das dritte Ausführungsbeispiel beschrieben. Die zwei Kanäle können entweder mit einem des ersten bis dritten Leiters 41 bis 43 oder mit zwei des ersten bis dritten Leiters 41 bis 43 realisiert werden. Im letzteren Fall würde das Datensignal 61 parallel auf zwei Leitern übertragen. Der elektrische Strom 60 und das Datensignal 61 werden somit auch über zwei verschiedene Kanäle der Anschlussleitung 50 übertragen. Die zwei Kanäle können entweder mit einem des ersten bis dritten Anschlussleiters 51 bis 53 oder mit zwei Anschlussleitern des ersten bis dritten Anschlussleiters 51 bis 53 realisiert werden.

Gemäß noch einer weiteren Modifikation des dritten Ausführungsbeispiels kann das Datensignal 61 auch auf den elektrischen Strom 60 aufmoduliert sein oder von ihm demoduliert werden. In diesem Fall würde das Datensignal 61 mit dem elektrischen Strom 60 gemeinsam in der Anschlusseinrichtung 90 kontaktlos übertragen.

Das dritte Ausführungsbeispiel und seine Modifikationen ist insbesondere günstig, wenn die Anschlusseinrichtung 90 bei einer Etikettiermaschine 4 in einem sehr begrenzten Raum zwischen zwei Etikettiermodulen angeordnet werden soll und somit nur sehr wenig Raum für die Anschlusseinrichtung 90 zur Verfügung steht.

Die Anschlusseinrichtung 90 gemäß dem dritten Ausführungsbeispiel und seinen Modifikationen bietet außerdem den Vorteil, dass sie wegen des nicht vorhandenen elektromechanischen Stecksystems zur Datenübertragung systembedingt sehr wenig verschleißbehaftet und sehr resistent gegen Verschmutzung ist.

Alle zuvor beschriebenen Ausgestaltungen der Behälterbehandlungsanlage 1, der Etikettiermaschine 4 und des Verfahrens können einzeln oder in allen möglichen Kombinationen Verwendung finden. Zusätzlich sind insbesondere folgende Modifikationen denkbar.

Die in den Figuren dargestellten Teile sind schematisch dargestellt und können in der genauen Ausgestaltung von den in den Figuren gezeigten Formen abweichen, solange deren zuvor beschriebenen Funktionen gewährleistet sind.

Die Behälterbehandlungsanlage 1 kann im Fall von Behältern 2 aus Kunststoff eine neben der Etikettiermaschine 4 beispielsweise eine Blasmaschine mit einer vorgeschalteten Heizeinrichtung, eine Reinigungsmaschine, eine Füllmaschine, usw. aufweisen. Im Fall von Behältern 2 aus Glas kann die Blasmaschine mit vorgeschalteter Heizeinrichtung entfallen.

Die Grundsignalform des elektrischen Stroms 60, auch welche das Datensignal 61 aufmoduliert ist oder wird, kann eine andere Signalform als sinus- oder cosinusförmig haben. Es ist jede andere mögliche Signalform denkbar, welche die zuvor beschriebenen Funktionen der Erfindung erfüllt.

Zudem kann auch das Datensignal 61 eine andere Signalform als rechteckförmig oder sinus- oder cosinusförmig haben. Es ist jede andere mögliche Signalform denkbar, welche die zuvor beschriebenen Funktionen der Erfindung erfüllt.

Die Anschlusseinheit 39 muss nicht in Form einer RJ-45-Buchse ausgeführt sein, wie in Bezug auf in Fig. 4 beschrieben. Die Anschlusseinheit 39 kann auch eine andere Ausführungsform haben, solange diese für die zuvor beschriebene Funktion geeignet ist. Beispielsweise ist auch die Ausführung der Anschlusseinheit 39 als USB-Schnittstelle (USB = Universal Serial Bus = Universeller serieller Bus) möglich, so dass mindestens eine der Steuersignalverbindungen 49, 59 an ihrem Ende für die USB-Schnittstelle passend ausgebildet ist.

Das Powerline-Modem 70 von Fig. 5 kann, neben der Funkeinheit 71 für eine drahtlose Kommunikation mit der jeweiligen Steuereinrichtung 13, 38, zusätzlich mindestens eine Anschlusseinheit 39, also für eine drahtgebundene Kommunikation, aufweisen, wie in Bezug auf Fig. 4 und zuvor beschrieben. In diesem Fall können noch weitere Geräte als nur die Steuereinrichtungen 12, 21 mit dem Powerline-Modem 70 verbunden werden.

Auch die Anschlusseinrichtung 90 gemäß dem dritten Ausführungsbeispiel kann die Medienanschlüsse 35 bis 37 als Anschlusseinheit für physikalische oder nicht-elektrische Medien aufweisen.

### Bezugszeichenliste

- 1: Behälterbehandlungsanlage
- 2: Behälter
- 3: Etikett
- 4: Etikettiermaschine
- 10: Hauptmaschine
- 11: elektrischer Schaltschrank
- 12: Hauptsteuereinrichtung
- 13: Powerline-Modem
- 20: Etikettiermodul
- 21: Etikettiermodul-Steuereinrichtung
- 30: Anschlusseinrichtung
- 31, 32, 33, 34: Anschlusselemente
- 35, 36, 37: Medienanschlüsse
- 38: Powerline-Modem
- 39: Anschlusseinheit
- 40: Verbindungsleitung
- 41: erster Leiter
- 42: zweiter Leiter
- 43: dritter Leiter
- 44: vierter Leiter, Neutralleiter
- 45: erster Knoten
- 46: erste Stichleitung
- 47: zweiter Knoten
- 48: zweite Stichleitung
- 49: erste Steuersignalverbindung
- 50: Anschlussleitung
- 51: erster Anschlussleiter
- 52: zweiter Anschlussleiter
- 53: dritter Anschlussleiter
- 54: vierter Anschlussleiter, Neutralleiter
- 55: dritter Knoten
- 56: dritte Stichleitung
- 57: vierter Knoten
- 58: vierte Stichleitung
- 59: zweite Steuersignalverbindung
- 60: elektrischer Strom
- 61: Datensignal
- 70: Powerline-Modem
- 71: Funkeinheit
- 80: Anschlusseinrichtung
- 90: Anschlusseinrichtung
- 91, 92: Verbindung
- 95: erster Übertrager
- 96: zweiter Übertrager
- 100: Anschlusseinrichtung
- 101, 102, 103, 104: Anschlusselement
- 105, 106: Datenanschluss
- 107: Steckerstift

## Patentansprüche

1. Etikettiermaschine (4), mit
mindestens einem Etikettiermodul (20) zum Etikettieren von Behältern (2) mit einem Etikett (3), und
einer Anschlusseinrichtung (30; 80) zum Anschluss eines Etikettiermoduls (20) an eine elektrische Stromleitung (40, 50), mit welcher das Etikettiermodul (20) mit elektrischem Strom (60) zum Betrieb des Etikettiermoduls (20) versorgbar ist,
wobei die Anschlusseinrichtung (30; 80) derart ausgestaltet ist, dass eine Datenverbindung zur Übertragung eines Datensignals (61) zwischen dem Etikettiermodul (20) und der Etikettiermaschine (4) über den Anschluss für die elektrische Stromleitung (40, 50) realisiert ist.

2. Etikettiermaschine nach Anspruch 1,
wobei das Etikettiermodul (20) von einer Etikettiermodul-Steuereinrichtung (21) zur Steuerung des Etikettiermoduls (20) steuerbar ist, und
wobei die Datenverbindung zwischen einer Etikettiermodul-Steuereinrichtung (21) und einer Hauptsteuereinrichtung (12) der Etikettiermaschine (4) vorgesehen ist.

3. Etikettiermaschine nach Anspruch 2,
wobei das Etikettiermodul (20) oder die Anschlusseinrichtung (30; 80) ein erstes Powerline-Modem (13) zum Modulieren des Datensignals (61) auf den elektrischen Strom (60) der Stromversorgung oder zum Demodulieren des Datensignals (61) von dem elektrischen Strom (60) der Stromversorgung aufweist, und
wobei der Hauptsteuereinrichtung (12) ein zweites Powerline-Modem (38) zugeordnet ist zum Modulieren eines Datensignals (61) auf den elektrischen Strom (60) der Stromversorgung oder zum Demodulieren eines Datensignals (61) von dem elektrischen Strom (60) der Stromversorgung.

4. Etikettiermaschine nach Anspruch 3, wobei das erste und das zweite Powerline-Modem (13, 38) mit einem ersten Leiter (41) und dem Neutralleiter (44) der elektrischen Stromversorgung verbunden sind, so dass das Datensignal (61) mit dem ersten Leiter (41) und dem Neutralleiter (44) übertragbar ist.

5. Etikettiermaschine nach Anspruch 3 oder 4, wobei das erste und zweite Powerline-Modem (13, 38) jeweils eine drahtgebundene oder drahtlose Schnittstelle für die Datenverbindung aufweist, und/oder
wobei das erste Powerline-Modem (13) einen Anschluss für eine Datenleitung zu der Etikettiermodul-Steuereinrichtung (21) bereitstellt und das zweite Powerline-Modem (38) einen Anschluss für eine Datenleitung zu der Hauptsteuereinrichtung (12) bereitstellt.

6. Etikettiermaschine, mit
mindestens einem Etikettiermodul (20) zum Etikettieren von Behältern (2) mit einem Etikett (3), und
einer Anschlusseinrichtung (90) zum Anschluss eines Etikettiermoduls (20) an eine elektrische Stromleitung (40, 50), mit welcher das Etikettiermodul (20) mit elektrischem Strom (60) zum Betrieb des Etikettiermoduls (20) versorgbar ist,
wobei die Anschlusseinrichtung (90) zudem zur kontaktlosen Übertragung eines Datensignals (61) zwischen dem Etikettiermodul (20) und der Etikettiermaschine (4) ausgestaltet ist.

7. Etikettiermaschine nach Anspruch 6,
wobei die Anschlusseinrichtung (90) zur kapazitiven Übertragung des Datensignals (61) ausgestaltet ist.

8. Etikettiermaschine nach Anspruch 6 oder 7,
wobei das Etikettiermodul (20) von einer Etikettiermodul-Steuereinrichtung (21) zur Steuerung des Etikettiermoduls (20) steuerbar ist, und
wobei das Datensignal (61) zwischen einer Etikettiermodul-Steuereinrichtung (21) und einer Hauptsteuereinrichtung (12) der Etikettiermaschine (4) übertragbar ist.

9. Etikettiermaschine nach einem der vorangehenden Ansprüche, wobei das Datensignal (61) gemäß dem Übertragungsprotokoll eines lokalen Netzwerks aufgebaut ist.

10. Etikettiermaschine nach einem der vorangehenden Ansprüche, wobei das Datensignal (61) gemäß einer der Spezifikationen für Ethernet oder Token-Ring oder WLAN oder Bluetooth aufgebaut ist.

11. Etikettiermaschine nach einem der vorangehenden Ansprüche, wobei die Anschlusseinrichtung (30; 80; 90) eine Anschlusseinheit (39) zum Anschluss eines flüssigen und/oder gasförmigen Mediums an das Etikettiermodul (20) aufweist

12. Behälterbehandlungsanlage (1), mit
einer Etikettiermaschine (4) nach einem der vorangehenden Ansprüche.

13. Verfahren zum Etikettieren von Behältern (2), mit den Schritten Anbringen (S1) eines Etiketts (3) an einen Behälter (2) mit einem Etikettiermodul (20) einer Etikettiermaschine, welches Etikettiermodul (20) eine Anschlusseinrichtung (30; 80; 90) aufweist zum Anschluss des Etikettiermoduls (20) an eine elektrische Stromleitung (40, 50), mit welcher das Etikettiermodul (20) mit elektrischem Strom (60) zum Betrieb des Etikettiermoduls (20) versorgt wird, und
Steuern (S2) des Anbringens über eine Datenverbindung zur Übertragung eines Datensignals (61) zwischen dem Etikettiermodul (20) und der Behälterbehandlungsanlage (1),
wobei die Datenverbindung über den Anschluss für die elektrische Stromleitung (40, 50) der Anschlusseinrichtung (30; 80) realisiert wird, oder
wobei das Datensignal (61) zwischen dem Etikettiermodul (20) und der Etikettiermaschine (4) in der Anschlusseinrichtung (90) kontaktlos übertragen wird.
